# EUROPÄISCHE PATENTSCHRIFT

(11) **EP 2 434 185 B1**
(45) Veröffentlichungstag und Bekanntmachung des Hinweises auf die Patenterteilung: **21.01.2015**
(21) Anmeldenummer: 11176380.1
(22) Anmeldetag: 03.08.2011
(51) Int. Cl.: F16H 61/28, F16D 48/06, F16H 61/12, F16D 48/02

(54) **Verfahren zum Betätigen einer Baugruppe eines Getriebes**
Method for actuating a a component of a gear
Procédé d'actionnement d'un composant d'un engrenage

(30) Priorität: 22.09.2010 DE 102010041187
(43) Veröffentlichungstag der Anmeldung: 28.03.2012
(73) Patentinhaber: ZF Friedrichshafen AG, 88038 Friedrichshafen (DE)
(72) Erfinder: Kramer, Rupert, 88048 Friedrichshafen (DE); Herter, Peter, 88212 Ravensburg (DE)

(56) Entgegenhaltungen:
- EP-A1- 1 750 040
- WO-A2-2007/022889

## Beschreibung

Die Erfindung betrifft ein Verfahren zum Betätigen einer Baugruppe eines Getriebes nach dem Oberbegriff des Anspruchs 1.

Aus der WO 2007/022889 A2 ist eine Baugruppe eines Kraftfahrzeuggetriebes bekannt, die mithilfe von Aktuatoren betätigt werden kann. Bei der nach diesem Stand der Technik zu betätigenden Baugruppe des Kraftfahrzeuggetriebes handelt es sich um eine Kupplung, die mithilfe von als Ventilen ausgebildeten Aktuatoren betätigt werden kann. Eine als Regler ausgebildete Steuerungseinrichtung stellt eine Ausgangsgröße bereit, um Aktuatoren anzusteuern, nämlich derart, dass eine Zustandsgröße der zu betätigenden Baugruppe einer steuerungsseitigen Sollgröße entspricht bzw. folgt.

Aus der WO 2007/022889 A2 ist es weiterhin bekannt, dass der zu betätigenden Baugruppe mehrere Aktuatoren zugeordnet sind, die einer gleichartigen Betätigung der zu betätigenden Baugruppe dienen. So sind nach diesem Stand der Technik dem zu betätigenden Stellzylinder der Kupplung einerseits mehrere Einlassventil und andererseits mehrere Auslassventile zugeordnet, wobei die beiden Einlassventile sowie die beiden Auslassventile einer gleichartigen Betätigung des Stellzylinders dienen, nämlich derart, dass der Stellzylinder über die mehreren Einlassventile in einer ersten Richtung und über die mehreren Auslassventile in einer entgegen gesetzten zweiten Richtung verlagert werden kann. Dabei verfügen die beiden Einlassventile sowie die beiden Auslassventile nach diesem Stand der Technik über unterschiedliche Strömungsquerschnitte, wobei der Regler abhängig von einer gewünschten Verlagerungsrichtung und einer steuerungsseitigen Sollgröße für die Zustandsgröße des Stellzylinders entweder ausschließlich eines der Einlassventile bzw. eines der Auslassventile oder beide Einlassventile bzw. beide Auslassventile in Kombination über seine Ausgangsgröße ansteuert. Die EP-A-1750040 zeigt die Merkmale des Oberbegriffs des Anspruchs 1.

Die unterschiedlichen Aktuatoren werden unterschiedlich häufig eingesetzt und demnach unterschiedlich stark beansprucht. Die Aktuatoren, die der höchsten Beanspruchung unterliegen, die also dem größten Verschleiß ausgesetzt sind, bestimmen die insgesamt verfügbare Betriebsdauer der zu betätigenden Baugruppe. Zur Erhöhung der zur Verfügung stehenden Betriebsdauer muss jeder am stärksten beanspruchte Aktuator im Hinblick auf seine zu erwartende maximale Beanspruchung ausgelegt bzw. dimensioniert werden, wodurch höhere Kosten verursacht werden.

Hiervon ausgehend liegt der vorliegenden Erfindung die Aufgabe zu Grunde ein neuartiges Verfahren zum Betätigen einer Baugruppe eines Getriebes zu schaffen. Diese Aufgabe wird durch ein Verfahren gemäß Anspruch 1 gelöst. Erfindungsgemäß wählt die Steuerungseinrichtung aus den prinzipiell zur Betätigung der Baugruppe zur Verfügung stehenden Aktuatoren mindestens einen Aktuator zur tatsächlichen Betätigung der Baugruppe derart aus, dass sich für alle prinzipiell zur Betätigung der Baugruppe zur Verfügung stehenden Aktuatoren über die Betriebsdauer des Getriebes eine in etwa gleichmäßige Beanspruchung einstellt.

Mit der hier vorliegenden Erfindung wird erstmals vorgeschlagen, dass eine Steuerungseinrichtung, so zum Beispiel ein Regler, aus den prinzipiell zur Betätigung der Baugruppe zur Verfügung stehenden Aktuatoren mindestens einen Aktuator zur tatsächlichen Betätigung derart auswählt, dass sich für alle Aktuatoren über die Betriebsdauer des Getriebes gesehen eine in etwa gleichmäßige Beanspruchung einstellt. Dann, wenn für eine gleichmäßige Beanspruchung der zur Verfügung stehenden Aktuatoren gesorgt wird, können die nach dem Stand der Technik am stärksten beanspruchten Aktuatoren entweder kleiner und damit kostengünstiger ausgelegt werden, alternativ ist es hierdurch möglich die zur Verfügung stehende Betriebsdauer zu verlängern. Auch hierdurch ergeben sich Kostenvorteile.

Nach einer vorteilhaften Weiterbildung der Erfindung wird für jeden prinzipiell zur Betätigung der Baugruppe zur Verfügung stehenden Aktuator bezogen auf die zu beeinflussende Zustandsgröße mindestens ein Arbeitsbereich definiert, in welchen der jeweilige Aktuator zur Beeinflussung der Zustandgröße alleine und/oder in Kombination mit mindestens einem weiteren Aktuator prinzipiell einsetzbar ist, wobei hieraus redundante Arbeitsbereiche ermittelt werden, in welchen jeweils mindestens zwei Aktuatoren prinzipiell einsetzbar sind, und wobei innerhalb eines redundanten Arbeitsbereichs aus den im jeweiligen redundanten Arbeitsbereich prinzipiell zur Verfügung stehenden Aktuatoren mindestens ein Aktuator zur tatsächlichen Betätigung derart auswählt, dass sich für alle Aktuatoren über die Betriebsdauer des Getriebes eine in etwa gleichmäßige Beanspruchung einstellt. Die Definition von redundanten Arbeitsbereichen, in welchen prinzipiell zur Betätigung mehrere Aktuatoren zur Verfügung stehen, erlaubt eine besonders bevorzugte, gleichmäßige Beanspruchung der Aktuatoren.

Vorzugsweise wird über die vergangene Betriebsdauer des Getriebes für jeden prinzipiell zur Betätigung der Baugruppe zur Verfügung stehenden Aktuator mindestens eine Belastungskenngröße ermittelt, welche der vergangenen Beanspruchung des jeweiligen Aktuators entspricht, wobei innerhalb eines redundanten Arbeitsbereichs die Belastungskenngrößen der in dem jeweiligen redundanten Arbeitsbereich prinzipiell zur Betätigung der Baugruppe zur Verfügung stehenden Aktuatoren miteinander verglichen werden, und wobei auf Grundlage dieses Vergleichs zur tatsächlichen Betätigung mindestens ein Aktuator mit der geringsten vergangenen Beanspruchung bevorzugt ausgewählt wird. Die Ermittlung mindestens einer Belastungskenngröße für jeden Aktuator und die Auswertung der oder jeder Belastungskenngröße in dem jeweiligen redundanten Arbeitsbereich der entsprechenden Aktuatoren erlaubt eine besonders bevorzugte, gleichmäßige Beanspruchung der Aktuatoren.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:
- Fig. 1: eine schematisierte Anordnung einer Baugruppe, mehrerer Aktuatoren und einer Steuerungseinrichtung;
- Fig. 2: ein erstes Diagramm zur Verdeutlichung einer ersten Variante des erfindungsgemäßen Verfahrens zum Betätigen einer Baugruppe eines Getriebes; und
- Fig. 3: ein zweites Diagramm zur Verdeutlichung einer zweiten Variante des erfindungsgemäßen Verfahrens zum Betätigen einer Baugruppe eines Getriebes.

Die Erfindung betrifft ein Verfahren zum Betätigen einer Baugruppe eines Getriebes, zum Beispiel eines Stellzylinders einer Kupplung eines Getriebes.

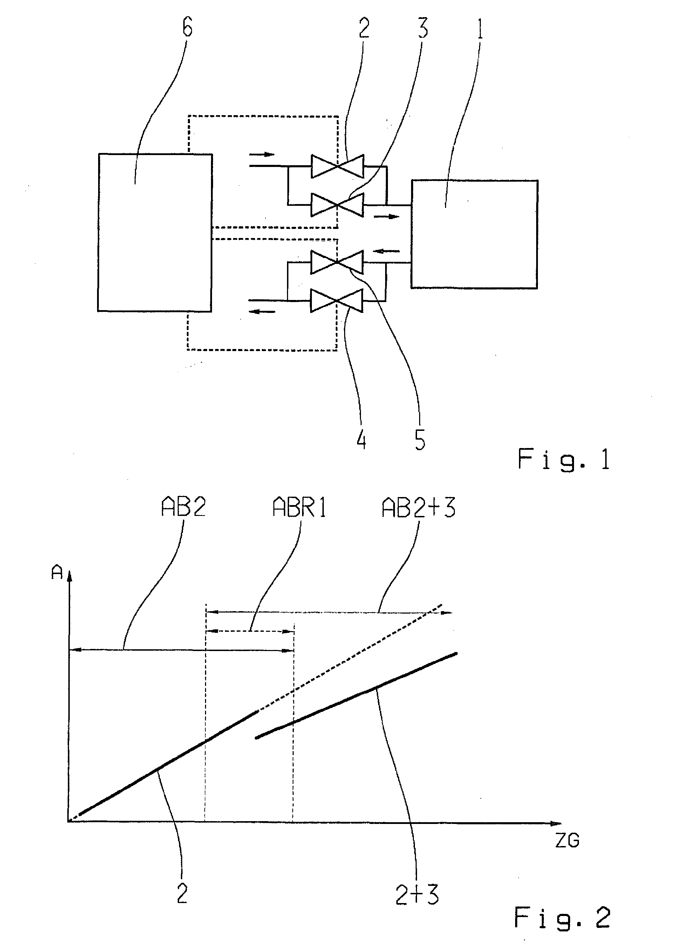

Fig. 1 zeigt stark schematisiert eine zu betätigende Baugruppe 1 eines Getriebes, bei welcher es sich zum Beispiel um einen Stellzylinder einer zu betätigenden Kupplung handelt. Zur Betätigung der Baugruppe 1 sind derselben mehrere Aktuatoren zugeordnet, nämlich als Einlassventile ausgebildete Aktuatoren 2 und 3 sowie als Auslassventile ausgebildete Aktuatoren 4 und 5. Zur Betätigung der Baugruppe 1 in beiden Betätigungsrichtungen stehen demnach jeweils zwei Aktuatoren 2 und 3 bzw. 4 und 5 zur Verfügung, sodass demnach zur Betätigung in jeder Betätigungsrichtung redundante Aktuatoren vorhanden sind. Die redundanten Aktuatoren dienen prinzipiell einer gleichförmigen Betätigung der zu betätigenden Baugruppe 1, dieselben können sich jedoch hinsichtlich ihrer Dimensionierung unterscheiden. So können die Einlassventile 2 und 3 sowie die Auslassventile 4 und 5 unterschiedliche Querschnitte aufweisen.

Zur Betätigung der Baugruppe 1 über die Aktuatoren 2, 3, 4 und 5 stellt eine Steuerungseinrichtung 6 eine Ausgangsgröße bereit, um die Aktuatoren 2, 3, 4 und 5 derart anzusteuern, dass eine Zustandsgröße der zu betätigenden Baugruppe einer steuerungsseitigen Sollgröße entspricht bzw. folgt. Für den in Fig. 1 gezeigten Stellzylinder handelt es sich bei dieser Zustandsgröße zum Beispiel um dessen Stellposition. Diese kann durch Ansteuerung der Ventile 2 bis 5 über die Steuerungseinrichtung 6 beeinflusst werden, wobei diese Stellposition in einer ersten Richtung über eines oder mehrere der Einlassventile 2, 3 und in einer zweiten, entgegen gesetzten Richtung über eines oder mehrere der Auslassventile 4 und 5 beeinflusst wird.

Im Sinne der Erfindung wird vorgeschlagen, dass die Steuerungseinrichtung 6 aus den prinzipiell zur Betätigung der Baugruppe 1 zur Verfügung stehenden Aktuatoren mindestens einen Aktuator zur Betätigung der Baugruppe 1 derart auswählt, dass sich für alle prinzipiell zur Betätigung der Baugruppe 1 zur Verfügung stehenden Aktuatoren über die Betriebsdauer eine in etwa gleichmäßig Beanspruchung der Aktuatoren einstellt.

Für das in Fig. 1 gezeigte Beispiel, in welchem die zu betätigende Baugruppe 1 als Stellzylinder ausgebildet ist, der zur Betätigung in einer ersten Richtung als redundante Aktuatoren 2 und 3 zwei Einlassventile und zur Betätigung in einer zweiten Richtung als redundante Aktuatoren 4 und 5 zwei Auslassventile zugeordnet sind, bedeutet dies, dass die Steuerungseinrichtung 6 dann, wenn die als Stellzylinder zu betätigende Baugruppe 1 in der ersten Richtung zu betätigen ist, aus den für die erste Betätigungsrichtung prinzipiell zur Betätigung zur Verfügung stehenden Aktuatoren 2 und 3 schließlich einen der Aktuatoren 2 bzw. 3 oder beiden Aktuatoren 2 und 3 in Kombination zur tatsächlichen Betätigung auswählt und ansteuert, nämlich derart, dass sich für die Aktuatoren 2 und 3 über die Betriebsdauer eine gleichmäßige Beanspruchung einstellt.

Soll die als Betätigungszylinder ausgebildet Baugruppe 1 in der zweiten Richtung betätigt werden, so stehen prinzipiell die Aktuatoren 4 und 5 zur Betätigung zur Verfügung, wobei dann die Steuerungseinrichtung 6 wiederum aus diesen prinzipiell zur Betätigung der Baugruppe 1 zur Verfügung stehenden Aktuatoren 4 und 5 ausschließlich den Aktuator 4 oder ausschließlich den Aktuator 5 oder in Kombination beide Aktuatoren 4 und 5 tatsächlich auswählt und ansteuert, sodass sich wiederum über die Betriebsdauer des Getriebes eine in etwa gleichmäßige Beanspruchung dieser redundanten Aktuatoren 4 und 5 einstellt.

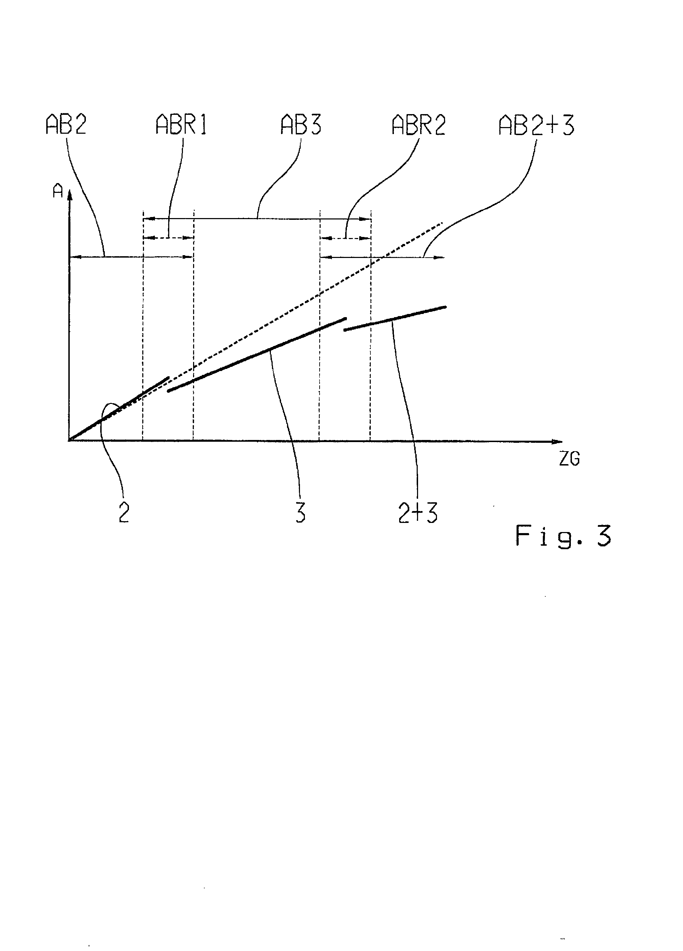

Weitere Details des erfindungsgemäßen Verfahrens werden nachfolgend unter Bezugnahme auf Fig. 2 und 3 beschrieben, nämlich für die redundanten Aktuatoren 2 und 3, wobei in Fig. 2 und 3 für die Aktuatoren A über einer Zustandsgröße ZG der zu betätigenden Baugruppe 1 für die prinzipiell zur Betätigung der Baugruppe 1 zur Verfügung stehenden Aktuatoren 2 und 3 bezogen auf die zu beeinflussende Zustandsgröße G Arbeitsbereiche definiert sind, in welchen der jeweilige Aktuator 2 bzw. 3 zur Beeinflussung der Zustandsgröße ZG alleine und/oder in Kombination mit mindestens einem weiteren Aktuator prinzipiell einsetzbar ist.

In Fig. 2 ist der Aktuator 2 alleine sowie in Kombination mit dem Aktuator 3 zur Beeinflussung der Zustandsgröße ZG prinzipiell einsetzbar. In Fig. 2 ist hingegen der Aktuator 3 nur in Kombination mit dem Aktuator 2 prinzipiell zur Beeinflussung der Zustandsgröße ZG einsetzbar.

In Fig. 3 hingegen sind beide Aktuatoren 2 und 3 sowohl prinzipiell alleine als auch prinzipiell in Kombination miteinander zur Beeinflussung der Zustandsgröße ZG einsetzbar.

In der Variante der Fig. 2 steht demnach zur Beeinflussung der Zustandsgröße ZG der zu betätigenden Baugruppe 1 in einem unteren Stellbereich der Zustandsgröße ZG prinzipiell ausschließlich der Aktuator 2 alleine zur Verfügung, wobei dieser Arbeitsbereich AB2 für den Aktuator 2, in welchem derselbe alleine zur Beeinflussung der Zustandsgröße ZG zur Verfügung steht, in Fig. 2 durch einen Doppelpfeil visualisiert ist. In einem oberen Stellbereich der Zustandsgröße ZG steht in der Variante der Fig. 2 die Kombination beider Aktuatoren 2 und 3 zur Verfügung, wobei der Arbeitsbereich, in welchem beide Aktuatoren 2 und 3 in Kombination miteinander zur Beeinflussung der Zustandsgröße ZG prinzipiell zur Verfügung stehen, in Fig. 2 durch AB2+3 visualisiert ist.

Aus diesen Arbeitsbereichen AB2 und AB2+3 wird in der Variante der Fig. 2 ein redundanter Arbeitsbereich ABR1 ermittelt, in welchem zur Betätigung der Baugruppe 1 mehrere Aktuatoren prinzipiell zur Verfügung stehen, nämlich in Fig. 2 derart, dass in dem auf die Zustandsgröße ZG bezogenen redundanten Arbeitsbereich ABR1 die Zustandsgröße ZG entweder alleine durch den Aktuator 2 oder alternativ durch eine Kombination von Aktuator 2 und Aktuator 3 beeinflusst werden kann.

Erfindungsgemäß wird in dem redundanten Arbeitsbereich ABR1 von der Steuerungseinrichtung 6 Aktuator 2 alleine oder Aktuator 2 in Kombination mit Aktuator 3 zur tatsächlichen Betätigung der Baugruppe 1 ausgewählt, nämlich derart, dass sich für die Aktuatoren 2 und 3 über die Betriebsdauer des Getriebes eine in etwa gleichmäßige Beanspruchung einstellt. Werden beide Aktuatoren 2 und 3 gemeinsam in Kombination miteinander zur Betätigung der Baugruppe 1 ausgewählt, so reduziert sich gegenüber dem Fall, in welchem der Aktuator 2 alleine zur Betätigung der Baugruppe 1 ausgewählt wird, für den Aktuator 2 dessen Beanspruchung.

Um die obige Auswahl von prinzipiell zur Verfügung stehenden Aktuatoren im redundanten Arbeitsbereich ABR1 einfach und zuverlässig erfüllen zu können, wird für jeden prinzipiell zur Betätigung der Baugruppe 1 zur Verfügung stehenden Aktuator mindestens eine Belastungskenngröße ermittelt, welche der vergangenen Beanspruchung des jeweiligen Aktuators entspricht. Diese Belastungskenngröße kann zum Beispiel auf Basis der Anzahl von Einschaltzyklen eines Aktuators, auf Basis der kumulierten Ansteuerzeit eines Aktuators oder dergleichen ermittelt werden.

Innerhalb eines redundanten Arbeitsbereichs werden die Belastungskenngrößen der in dem jeweiligen redundanten Arbeitsbereich prinzipiell zur Betätigung der Baugruppe 1 zur Verfügung stehenden Aktuatoren miteinander verglichen, wobei auf Grundlage dieses Vergleichs zur tatsächlichen Betätigung mindestens einer der Aktuatoren ausgewählt wird, nämlich derjenige Aktuator mit der geringsten vergangenen Beanspruchung.

Bezogen auf das Ausführungsbeispiel der Fig. 2 bedeutet dies, dass sowohl für den Aktuator 2 als auch für den Aktuator 3 jeweils mindestens eine Belastungskenngröße ermittelt wird, welche der vergangenen Beanspruchung des jeweiligen Aktuators 2 bzw. 3 entspricht. Im redundanten Arbeitsbereich ABR1 werden dann die jeweiligen Belastungskenngrößen miteinander verglichen, wobei dann, wenn im redundanten Arbeitsbereich ABR1 die oder jede Belastungskenngröße des Aktuators 2 im Vergleich zum Aktuator 3 geringer ist, wenn also der Aktuator 2 im Vergleich zum Aktuator 3 eine geringere vergangene Belastung aufweist, im redundanten Arbeitsbereich ABR1 der Aktuator 2 alleine zur Betätigung der Baugruppe 1 ausgewählt wird. Weist hingegen der Aktuator 2 eine höhere vergangene Beanspruchung auf als der Aktuator 3, so wird im redundanten Arbeitsbereich ABR1 der Aktuator 2 in Kombination mit dem Aktuator 3 zur Betätigung der Baugruppe 1 ausgewählt, da in diesem Fall die Beanspruchung des Aktuators 2 gegenüber einer alleinigen Auswahl desselben reduziert werden kann.

Im Ausführungsbeispiel der Fig. 3, in welchem sowohl für den Aktuator 2 als auch für den Aktuator 3 Arbeitsbereiche AB2 und AB3 definiert sind, in welchen die beiden Aktuatoren 2 und 3 jeweils alleine prinzipiell zur Betätigung der zu betätigenden Baugruppe 1 zur Verfügung stehen, sind zwei redundante Arbeitsbereiche ABR1 und ABR2 definiert, wobei im redundanten Arbeitsbereich ABR1 sowohl der Aktuator 2 alleine als auch der Aktuator 3 alleine zur Betätigung der zu betätigenden Baugruppe 1 prinzipiell zur Verfügung stehen, und wobei im redundanten Arbeitsbereich ABR2 einerseits der Aktuator 3 alleine und andererseits Aktuator 2 und Aktuator 3 in Kombination miteinander zur Betätigung der Baugruppe 1 zur Verfügung stehen. Dann, wenn der Aktuator 2 im Vergleich zum Aktuator 3 aufgrund seiner ermittelten Kenngröße eine geringere vergangene Beanspruchung aufweist, wird im redundanten Arbeitsbereich ABR1 bevorzugt der Aktuator 2 und im redundanten Arbeitsbereich ABR2 bevorzugt der Aktuator 2 in Kombination mit dem Aktuator 3 zur Betätigung der Baugruppe ausgewählt und entsprechend angesteuert, um den Aktuator 3 zu entlasten. Dann hingegen, wenn der Aktuator 2 im Vergleich zum Aktuator 3 eine höhere vergangene Beanspruchung aufweist, wird im redundanten Arbeitsbereich ABR1 bevorzugt der Aktuator 3 und im redundanten Arbeitsbereich ABR2 bevorzugt der Aktuator 3 jeweils alleine zur Betätigung der Baugruppe 1 ausgewählt, um jeweils den Aktuator 2 zu entlasten.

Mit der hier vorliegenden Erfindung wird demnach ein Verfahren zum Betreiben einer von Aktuatoren betätigten Baugruppe eines Getriebes vorgeschlagen, bei welchem eine gleichmäßige Auslastung von Aktuatoren über die Definition von redundanten Arbeitsbereichen und durch die Ermittlung von Belastungskenngrößen realisiert wird. Unter redundanten Arbeitsbereichen ist im Sinne der Erfindung zu verstehen, dass die zu beeinflussende Zustandsgröße in der Baugruppe in einem redundanten Arbeitsbereich mit unterschiedlichen Aktuatoren alleine oder in Kombination miteinander unterschiedlich jedoch gleichartig beeinflusst werden kann.

Grenzen der redundanten Arbeitsbereiche können reduziert werden, um einen Sicherheitsabstand bereitzustellen. So ist es zum Beispiel möglich, dass dann, wenn in Fig. 2 der Arbeitsbereich AB2 bezogen auf die Zustandsgröße ZG zwischen 0 und 50% des Stellbereichs der Zustandsgröße ZG und der Arbeitsbereich AB2+3 zwischen 30 und 100% des Stellbereichs der Zustandsgröße ZG beträgt, den redundanten Arbeitsbereich ABR1, dessen harte Grenzen dann zwischen 30% und 50% liegen, um einen Sicherheitsabstand von jeweils 3% zu verringern, sodass dann der redundante Arbeitsbereich zwischen 33 und 47% des Stellbereichs der Zustandsgröße ZG beträgt. Damit kann die Zuverlässigkeit des erfindungsgemäßen Verfahrens gesteigert werden.

Das erfindungsgemäße Verfahren dient der gleichmäßigen Beanspruchung aller prinzipiell zur Betätigung einer Baugruppe zur Verfügung stehender Aktuatoren. Dadurch ist es möglich, entweder Aktuatoren kleiner zu dimensionieren oder für eine verlängerte Betriebsdauer derselben zu sorgen. In jedem Fall können hierdurch Kostenvorteile realisiert werden.

### Bezugszeichen

- 1: Baugruppe
- 2: Aktuator
- 3: Aktuator
- 4: Aktuator
- 5: Aktuator
- 6: Steuerungseinrichtung

## Patentansprüche

1. Verfahren zum Betätigen einer Baugruppe (1) eines Getriebes, der mehrere Aktuatoren (2, 3, 4, 5) zugeordnet sind, mit Hilfe derer die Baugruppe (1) prinzipiell betätigbar ist, wobei eine Steuerungseinrichtung (6) aus den prinzipiell zur Betätigung zur Verfügung stehenden Aktuatoren (2, 3, 4, 5) mindestens einen Aktuator zur tatsächlichen Betätigung auswählt und mit einer Ausgangsgröße derart ansteuert, dass eine Zustandsgröße (ZG) der betätigten Baugruppe (1) einer steuerungsseitigen Sollgröße entspricht bzw. folgt, **dadurch gekennzeichnet, dass** die Steuerungseinrichtung (6) aus den prinzipiell zur Betätigung der Baugruppe zur Verfügung stehenden Aktuatoren (2, 3, 4, 5) mindestens einen Aktuator zur tatsächlichen Betätigung der Baugruppe derart auswählt, dass sich für alle prinzipiell zur Betätigung der Baugruppe (1) zur Verfügung stehenden Aktuatoren (2, 3, 4, 5) über die Betriebsdauer des Getriebes eine in etwa gleichmäßige Beanspruchung einstellt.

2. Verfahren nach Anspruch 1, **dadurch gekennzeichnet, dass** für jeden prinzipiell zur Betätigung zur Verfügung stehenden Aktuator bezogen auf die Zustandsgröße (ZG) jeweils mindestens ein Arbeitsbereich definiert wird, in welchen der jeweilige Aktuator zur Beeinflussung der Zustandgröße (ZG) alleine und/oder in Kombination mit mindestens einem weiteren Aktuator prinzipiell einsetzbar ist, wobei mindestens ein redundanter Arbeitsbereich ermittelt wird, in welchem die Zustandsgröße mit unterschiedlichen Aktuatoren (2, 3, 4, 5) alleine oder in Kombination miteinander, unterschiedlich jedoch gleichartig, beeinflusst werden kann.

3. Verfahren nach Anspruch 2, **dadurch gekennzeichnet, dass** innerhalb eines redundanten Arbeitsbereichs aus den im jeweiligen redundanten Arbeitsbereich prinzipiell zur Betätigung der Baugruppe (1) zur Verfügung stehenden Aktuatoren (2, 3, 4, 5) mindestens ein Aktuator zur tatsächlichen Betätigung der Baugruppe (1) derart auswählt, dass sich für alle prinzipiell zur Betätigung der Baugruppe (1) zur Verfügung stehenden Aktuatoren (2, 3, 4, 5) über die Betriebsdauer des Getriebes **eine** in etwa gleichmäßige Beanspruchung einstellt.

4. Verfahren nach einem der Ansprüche 1 bis 3, **dadurch gekennzeichnet, dass** über die vergangene Betriebsdauer des Getriebes für jeden prinzipiell zur Betätigung der Baugruppe (1) zur Verfügung stehenden Aktuator mindestens eine Belastungskenngröße ermittelt wird, welche der vergangenen Beanspruchung des jeweiligen Aktuators entspricht.

5. Verfahren nach Anspruch 4, **dadurch gekennzeichnet, dass** innerhalb eines redundanten Arbeitsbereichs die Belastungskenngrößen der in dem jeweiligen redundanten Arbeitsbereich prinzipiell zur Betätigung der Baugruppe (1) zur Verfügung stehenden Aktuatoren (2, 3, 4, 5) miteinander verglichen werden, wobei auf Grundlage dieses Vergleichs zur tatsächlichen Betätigung mindestens ein Aktuator mit der geringsten vergangenen Beanspruchung bevorzugt ausgewählt wird.

6. Verfahren nach Anspruch 4 oder 5, **dadurch gekennzeichnet, dass** ein erster Aktuator in einem ersten auf die zu beeinflussende Zustandsgröße (ZG) bezogenen Arbeitsbereich alleine, ein zweiter Aktuator in einem zweiten auf die zu beeinflussende Zustandsgröße bezogenen Arbeitsbereich alleine und der erste Aktuator und der zweite Aktuator in Kombination miteinander in einem dritten auf die zu beeinflussende Zustandsgröße bezogenen Arbeitsbereich prinzipiell zur Betätigung der Baugruppe einsetzbar sind, wobei sich der erste und zweite Arbeitsbereich überlappen und einen ersten redundanten Arbeitsbereich definieren, wobei sich der zweite und dritte Arbeitsbereich überlappen und einen zweiten redundanten Arbeitsbereich definieren, wobei dann, wenn der erste Aktuator im Vergleich zum zweiten Aktuator eine geringere vergangene Beanspruchung aufweist, im ersten redundanten Arbeitsbereich bevorzugt der erste Aktuator alleine und im zweiten redundanten Arbeitsbereich bevorzugt der erste
Aktuator in Kombination mit dem zweiten Aktuator zur Betätigung der Baugruppe (1) ausgewählt wird.

7. Verfahren nach Anspruch 6, **dadurch gekennzeichnet, dass** dann, wenn der erste Aktuator im Vergleich zum zweiten Aktuator eine höhere vergangene Beanspruchung aufweist, im ersten redundanten Arbeitsbereich bevorzugt der zweite Aktuator alleine und im zweiten redundanten Arbeitsbereich bevorzugt der zweite Aktuator alleine zur Betätigung der Baugruppe (1) ausgewählt wird.

8. Verfahren nach Anspruch 4 oder 5, **dadurch gekennzeichnet, dass** ein erster Aktuator in einem ersten auf die zu beeinflussende Zustandsgröße (ZG) bezogenen Arbeitsbereich alleine und in einem zweiten auf die zu beeinflussende Zustandsgröße (ZG) bezogenen Arbeitsbereich in Kombination mit einem zweiten Aktuator prinzipiell zur Betätigung der Baugruppe (1) einsetzbar ist, wobei sich die beiden Arbeitsbereiche überlappen und einen redundanten Arbeitsbereich definieren, und wobei dann, wenn der erste Aktuator im Vergleich zum zweiten Aktuator eine geringere vergangene Beanspruchung aufweist, im redundanten Arbeitsbereich bevorzugt der erste Aktuator alleine zur Betätigung der Baugruppe (1) ausgewählt wird.

9. Verfahren nach Anspruch 8, **dadurch gekennzeichnet, dass** dann, wenn der erste Aktuator im Vergleich zum zweiten Aktuator eine höhere vergangene Beanspruchung aufweist, im redundanten Arbeitsbereich bevorzugt der erste Aktuator in Kombination mit dem zweiten Aktuator zur Betätigung der Baugruppe (1) ausgewählt wird.

## Claims

1. Method for actuating a component (1) of a gearbox, which component (1) is assigned a plurality of actuators (2, 3, 4, 5), by means of which the component (1) can be actuated in principle, wherein a control device (6) selects, from the actuators (2, 3, 4, 5) which are available in principle for actuation, at least one actuator for actual actuation and activates said actuator with an output variable in such a way that a state variable (ZG) of the actuated component (1) corresponds to, or follows, a control-side setpoint variable, **characterized in that** the control device (6) selects, from the actuators (2, 3, 4, 5) which are available in principle for actuating the component, at least one actuator for actually actuating the component in such a way that, over the service life of the gearbox, approximately uniform loading occurs for all the actuators (2, 3, 4, 5) which are available in principle for actuating the component (1).

2. Method according to Claim 1, **characterized in that**, for each actuator which is available in principle for actuation, in each case at least one working range is defined in relation to the state variable (ZG), in which working range the respective actuator can in principle be used alone to influence the state variable (ZG) and/or in combination with at least one further actuator, wherein at least one redundant working range is determined in which the state variable can be influenced with different actuators (2, 3, 4, 5) or in combination with one another, in different but in similar ways.

3. Method according to Claim 2, **characterized in that** at least one actuator for actually actuating the component (1) is selected within a redundant working range, from the actuators (2, 3, 4, 5) which are available in principle for actuating the component (1), in such a way that, over the service life of the gearbox, approximately uniform loading occurs for all the actuators (2, 3, 4, 5) which are available in principle for actuating the component (1).

4. Method according to one of Claims 1 to 3, **characterized in that** at least one load characteristic variable which corresponds to the preceding loading of the respective actuator is determined over the preceding service life of the gearbox for each actuator which is available in principle for actuating the component (1).

5. Method according to Claim 4, **characterized in that** within a redundant working range, the loading characteristic variables of the actuators (2, 3, 4, 5) which are available in principle for actuating the component (1) in the respective redundant working range are compared with one another, wherein at least one actuator with the smallest preceding loading is preferably selected on the basis of this comparison for actual actuation.

6. Method according to Claim 4 or 5, **characterized in that** a first actuator can be used alone in principle to actuate the component in a first working range relating to the state variable (ZG) to be influenced, a second actuator can be used alone in principle to actuate the component in a second working range relating to the state variable to be influenced, and the first and second actuators can be used in combination with one another in principle to actuate the component in a third working range relating to the state variable to be influenced, wherein the first and second working ranges overlap and define a first redundant working range, wherein the second and third working ranges overlap and define a second redundant working range, wherein when the first actuator has a lower preceding loading compared to the second actuator, the first actuator is preferably selected alone in the first redundant working range, and in the second redundant working range the first actuator is preferably selected in combination with the second actuator, to actuate the component (1).

7. Method according to Claim 6, **characterized in that** when the first actuator has higher preceding loading compared to the second actuator, the second actuator is preferably selected alone in the first redundant working range, and the second actuator is preferably selected alone in the second redundant working range, to actuate the component (1).

8. Method according to Claim 4 or 5, **characterized in that** a first actuator can be used in principle alone to actuate the component (1) in a first working range relating to the state variable (ZG) to be influenced, and can be used in principle in a second working range relating to the state variable (ZG) to be influenced, in combination with a second actuator to actuate the component (1), wherein the two working ranges overlap and define a redundant working range, and wherein, when the first actuator has lower preceding loading compared to the second actuator, the first actuator alone is preferably selected to actuate the component (1) in the redundant working range.

9. Method according to Claim 8, **characterized in that** when the first actuator has higher preceding loading compared to the second actuator, the first actuator is preferably selected in combination with the second actuator to actuate the component (1) in the redundant working range.

## Revendications

1. Procédé d'actionnement d'un module (1) d'une transmission, auquel sont associés plusieurs actionneurs (2, 3, 4, 5), à l'aide desquels le module (1) peut en principe être actionné, un dispositif de commande (6) sélectionnant, parmi les actionneurs (2, 3, 4, 5) disponibles en principe pour l'actionnement, au moins un actionneur pour l'actionnement effectif et le commandant avec une grandeur de départ de telle sorte qu'une grandeur d'état (ZG) du module actionné (1) corresponde à ou suive une grandeur de consigne du côté de la commande, **caractérisé en ce que** le dispositif de commande (6) sélectionne, parmi les actionneurs (2, 3, 4, 5) disponibles en principe pour l'actionnement du module, au moins un actionneur pour l'actionnement effectif du module, de telle sorte que pour tous les actionneurs (2, 3, 4, 5) disponibles en principe pour l'actionnement du module (1), une sollicitation approximativement uniforme s'établisse pendant toute la durée de fonctionnement de la transmission.

2. Procédé selon la revendication 1, **caractérisé en ce que** pour chaque actionneur disponible en principe pour l'actionnement, à chaque fois au moins une plage de travail est définie par rapport à la grandeur d'état (ZG), dans laquelle plage de travail l'actionneur respectif peut être utilisé en principe pour influencer la grandeur d'état (ZG) à lui seul et/ou en combinaison avec au moins un actionneur supplémentaire, au moins une plage de travail redondante étant déterminée, dans laquelle la grandeur d'état peut être influencée, différemment mais suivant un mode similaire, avec différents actionneurs (2, 3, 4, 5) seuls ou en combinaison les uns avec les autres.

3. Procédé selon la revendication 2, **caractérisé en ce qu'**à l'intérieur d'une plage de travail redondante, parmi les actionneurs (2, 3, 4, 5) disponibles en principe pour l'actionnement du module (1), au moins un actionneur pour l'actionnement effectif du module (1) est sélectionné de telle sorte que pour tous les actionneurs (2, 3, 4, 5) disponibles en principe pour l'actionnement du module (1), une sollicitation approximativement uniforme s'établisse pendant toute la durée de fonctionnement de la transmission.

4. Procédé selon l'une quelconque des revendications 1 à 3, **caractérisé en ce que** pendant la durée de fonctionnement précédente de la transmission, pour chaque actionneur disponible en principe pour l'actionnement du module (1), on détermine au moins une grandeur caractéristique de sollicitation qui correspond à la sollicitation précédente de l'actionneur respectif.

5. Procédé selon la revendication 4, **caractérisé en ce qu'**à l'intérieur d'une plage de travail redondante, les grandeurs caractéristiques de sollicitation des actionneurs (2, 3, 4, 5) disponibles en principe dans la plage de travail redondante respective pour l'actionnement du module (1) sont comparées les unes avec les autres, et sur la base de cette comparaison, l'on sélectionne de préférence pour l'actionnement effectif au moins un actionneur avec la sollicitation précédente la plus faible.

6. Procédé selon la revendication 4 ou 5, **caractérisé en ce qu'**un premier actionneur peut être utilisé seul en principe dans une première plage de travail rapportée à la grandeur d'état à influencer (ZG), un deuxième actionneur peut être utilisé seul en principe dans une deuxième plage de travail rapportée à la grandeur d'état à influencer, et le premier actionneur et le deuxième actionneur en combinaison l'un avec l'autre peuvent être utilisés en principe dans une troisième plage de travail rapportée à la grandeur d'état à influencer, pour l'actionnement du module, la première et la deuxième plage de travail se chevauchant et définissant une première plage de travail redondante, la deuxième et la troisième plage de travail se chevauchant et définissant une deuxième plage de travail redondante, et lorsque le premier actionneur, par comparaison avec le deuxième actionneur, présente une plus faible sollicitation précédente, de préférence le premier actionneur seul est sélectionné dans la première plage de travail redondante et de préférence le premier actionneur en combinaison avec le deuxième actionneur est sélectionné dans la deuxième plage de travail redondante, pour l'actionnement du module (1).

7. Procédé selon la revendication 6, **caractérisé en ce que** lorsque le premier actionneur, par comparaison avec le deuxième actionneur, présente une sollicitation précédente plus élevée, le deuxième actionneur seul est de préférence sélectionné dans la première plage de travail redondante, et le deuxième actionneur seul est de préférence sélectionné dans la deuxième plage de travail redondante, pour actionner le module (1).

8. Procédé selon la revendication 4 ou 5, **caractérisé en ce qu'**un premier actionneur seul peut être utilisé en principe, dans une première plage de travail rapportée à la grandeur d'état à influencer (ZG), et peut être utilisé en principe en combinaison avec un deuxième actionneur dans une deuxième plage de travail rapportée à la grandeur d'état à influencer (ZG), pour l'actionnement du module (1), les deux plages de travail se chevauchant et définissant une plage de travail redondante, et lorsque le premier actionneur, par comparaison avec le deuxième actionneur, présente une plus faible sollicitation précédente, le premier actionneur seul est sélectionné de préférence dans la plage de travail redondante pour l'actionnement du module (1).

9. Procédé selon la revendication 8, **caractérisé en ce que** lorsque le premier actionneur, par comparaison avec le deuxième actionneur, présente une sollicitation précédente plus élevée, le premier actionneur est sélectionné de préférence dans la plage de travail redondante en combinaison avec le deuxième actionneur pour l'actionnement du module (1).
